# EUROPEAN PATENT APPLICATION

(11) **EP 4 310 483 A1**
(43) Date of publication of application: **24.01.2024**
(21) Application number: 22186203.0
(22) Date of filing: 21.07.2022
(51) Int. Cl.: G01N 21/78

(54) **COLOR READING DEVICE**

(71) Applicant: Merck Patent GmbH, 64293 Darmstadt (DE)
(72) Inventor: Degenring, Daniela Sabine Jutta, 64293 Darmstadt (DE); Fischer, Robert, 61476 Kronberg im Taunus (DE); Schunda, Eric, 61476 Kronberg im Taunus (DE)
(74) Representative: Merck Patent Association

(57) **Abstract**

A color reading device (1) for reading a color of a wet sample surface region (12) of a sample (2) comprises a light source (8) for illuminating the sample surface region (12) and further comprises a light intensity sensor (13) for measuring a light intensity that is scattered or reflected from the illuminated sample surface region (12), which can be used for determining the color of the illuminated sample surface region (12). The color reading device (1) comprises a light transmitting layer (4) of a translucent or transparent material with a first surface (5) of the light transmitting layer (4) comprising a out-coupling surface region (11) onto which the sample surface region (12) of the sample (2) can be placed. The light source (8) is arranged at a coupling side surface (9) of the light transmitting layer (4), whereby the arrangement of the light source (8) with respect to the coupling side surface (9) is designed to couple light that is emitted from the light source (8) into the light transmitting layer (4) in such a manner that at least part of the light is then totally reflected within the light transmitting layer (4) along a light transmission direction that passes by the out-coupling surface region (11)where light can be coupled out of the light transmitting layer (4), for instance due to a wetted surface, to illuminate the sample surface region (12) .

## Description

### Technical Field

The invention relates to a color reading device for reading a color of a wet sample surface region, whereby the reading device comprises a light source for illuminating the wet sample surface region, and further comprises a light intensity sensor for measuring a light intensity that is reflected from the illuminated wet sample surface region, which can be used for determining the color of the illuminated wet sample surface region.

### Background of the invention

Test strips or dipsticks contain one or more pads with reagents, which change color in a chemical reaction when dipped in a liquid testing solution containing a specific compound. The color change indicates the presence of the compound and sometimes also allows for an estimation of the compound's concentration in the solution. Reflectometric methods measure the color change by illuminating the pad with a given intensity and measuring the reflected light intensity, whereby the reflected light intensity is usually measured in spectral bands. Then the reflected light intensity in spectral bands can be compared with a reflected intensity of e.g. a white reference. Pre-determined calibration parameters for the specific lot of tests trips can be used for calculating the compound concentration in the testing solution based on the light intensity that is reflected from the test strip and that is measured with the light intensity sensor.

In common color reading devices the test strips have to be inserted into a detection unit that is usually a dark chamber or an enclosed sample holder for a reflectometric measurement. This is difficult in handling and thus increases the time of measurement. The color reading device is not completely enclosed, so that it may be exposed to contaminants introduced by e.g. cleaning solutions. In general, it is difficult to clean the color reading device without affecting the detection unit.

Furthermore, preventing the light from the light source to directly illuminate the light intensity sensor and to interfere with the color reading of the sample surface region requires considerable design efforts. If the light source is located next to the light intensity sensor in order to allow for a large light intensity being reflected from the test strip that is arranged opposite to the light source and light intensity sensor, the heat transfer caused by the light source during the performance of a measurement may reduce the accuracy of measurements. On the other hand, a large distance between the light source and the light intensity sensor significantly reduces the amount of light that is reflected by the sample surface region onto the light intensity sensor which reduces the signal to noise ratio of the sensor measurement data and thus reduces the accuracy as well. Additional optical elements like lenses tend to increase the production cost of the color reading device.

Also other samples beside test strips require the use of color reading devices for analyzing or measuring a color which e.g. might indicate the result of an analytical test or be the indicator for a certain purity. Examples of other samples beside test strips are lateral flow assays or powders. Especially in the area of powders the variety of samples is broad and reaches from milk powder which needs to be analyzed for color changes due to impurities to color pigments which need to be analyzed to determine and specify their color.

Accordingly, there is a need for a color reading device that allows for a simple design and handling of the color reading device, but provides accurate results.

### Summary of the invention

The present invention relates to a color reading device as described in the beginning, whereby the reading device comprises a light transmitting layer of a translucent or transparent material with a first surface of the layer comprising an out-coupling surface region onto which the sample can be placed, and with the light intensity sensor preferably arranged at the other side of the light transmitting layer opposite to the out-coupling surface region. The light that is emitted from a light source is then at least partly transmitted through the transmitting layer by total reflection and is coupled out in case it reaches the out-coupling surface region with a wet sample placed thereon. The light strikes the sample surface region that is arranged adjacent to and facing towards the out-coupling surface region. Part of the light resulting from a substractive color mixture depending on the color of the sample is then reflected through the light transmitting layer and can be detected by the light intensity sensor, and whereby the light source is arranged at a coupling side surface of the light transmitting layer, whereby the arrangement of the light source with respect to the coupling side surface is designed to couple light that is emitted from the light source into the light transmitting layer in such a manner that at least part of the light is then totally reflected within the light transmitting layer along a light transmission direction that passes by the out-coupling surface region. It is considered a major advantage of using a light transmitting layer made of a suitable transparent or translucent material that separates the sample from the light intensity sensor and directs the light emission from the light source via total internal reflection onto the sample surface region on one side of the light transmitting layer and to detect the reflected light intensity adjacent to the other side of the layer of translucent material. Thus, there is no open detection unit required into which the test strip must be placed and which afterwards must be closed in a light-tight manner before performing a measurement cycle. Furthermore, the light source can be arranged at a distance from the light intensity sensor as almost the full amount of light that is coupled into the light transmitting layer will be totally reflected within the light transmitting layer and transmitted along the light transmitting layer in the direction of the out-coupling surface region. The first surface and the second surface of the light transmitting layer are preferably aligned in parallel or with a very small acute angle towards each other in order to provide for favorable conditions for a multitude of total internal reflections of light that is transmitted within the light transmitting layer along the transmission direction.

Due to the moisture or wetness of sample that has been wetted e.g. by exposure to a liquid testing solution, there will be a reduced total reflection within the out-coupling surface region, and a part of the light that is transmitted along the light transmitting layer will not stay within the light transmitting layer but exit the light transmitting layer at the out-coupling surface region. Most part of the light that exits at the out-coupling surface region will be reflected by the sample surface and directed towards the light intensity sensor that is arranged opposite of the out-coupling surface region at the other side of the light transmitting layer. The reflected light will then traverse through the translucent or transparent material of the light transmitting layer and illuminate the light intensity sensor. Due to the direction of the reflected light that is perpendicular or almost perpendicular to the reflection surface and to the opposite surface of the light transmitting layer, there will be no total internal reflection of the reflected light coming from the sample surface and illuminating the light intensity sensor at the other side of the light transmitting layer. Thus, at least a part of the light that is reflected by the sample surface region opposite of the light intensity sensor will be directed towards and detected by the light intensity sensor. All light that is transmitted via total internal reflection along the light transmitting layer and that does not exit the light transmitting layer at the out-coupling surface region will not exit the light transmitting layer at the other side of the light transmitting layer opposite to the out-coupling surface region, as for this light the conditions for total internal reflection still applies and this light will be transmitted further along the transmitting direction, thereby passing by the out-coupling surface region and the light intensity sensor that is arranged opposite to the out-coupling surface region.

Even though some part of the light that passes along the out-coupling surface region will not exit the light transmitting layer, and even though another part of the light that exits this light transmitting layer at the out-coupling surface region and is reflected by the corresponding sample surface region that touches the out-coupling surface region will not be detected by the light intensity sensor, the efficiency of such an arrangement and the signal to noise ratio that can be achieved allows for accurate measurements and good color reading characteristics of the color reading device. Furthermore, as the light source can be arranged at a distance to the light intensity sensor, it is possible to increase the luminosity of the light source without interfering with the accuracy e.g. due to heat emission caused by the operation of the light source. Thus, it has been found that neither the light intensity that can be coupled into the light transmitting layer nor the reduced amount of light that is reflected by the sample surface region and subsequently detected by the light intensity sensor result in a significant limitation of this color reading device or of the accuracy of the measurement data.

The efficiency of the light that is transmitted through the light transmitting layer, coupled out at the out-coupling surface region, reflected by the sample and detected by the light intensity sensor can be influenced by several parameters like the size of the coupling side surface, the length of the light transmitting layer, the thickness of the light transmitting layer, the surface of the light transmitting layer as well as the position and distance of the light source. The skilled person can adjust such parameters depending on the requirements and use of the color reading device. For some applications it might be advantageous to have a very small device whereby the sensitivity is of less importance, for other applications sensitivity might be the key aspect.

One possibility to influence the amount of light that is transmitted through the light transmitting layer is the size of the coupling side surface. This surface is preferably a plane surface. It might be oriented in any angle towards the first surface of the light transmitting layer. In case of a square angle, for example, the light source is typically positioned on the same level, in extension to the light transmitting layer and the coupling side surface.

According to an advantageous aspect of the invention, the coupling side surface is a plane surface that is oriented with an acute angle towards the first surface comprising the out-coupling surface region or towards a second surface of the light transmitting layer that opposes the first surface. A small angle between the coupling side surface and the first surface or opposite second surface of the layer of translucent material allows for a large size of the coupling side surface that extends from the first surface to the second surface. A large size of the coupling side surface allows for a larger amount of light that is emitted from the light source in different directions to couple into the light transmitting layer and to be transmitted along the light transmitting layer in such a manner as to homogeneously illuminate the out-coupling surface region.

In order to support and enhance the homogeneous illumination of the out-coupling surface region with light that has been coupled into the light transmitting layer of translucent or transparent material, the coupling side surface can be roughened or coated in order to provide for a coupling of diffuse light into the light transmitting layer of translucent or transparent material.

In yet another embodiment of the invention, the light transmitting layer of translucent material further comprises a back side surface opposite to the coupling side surface that reflects light back in the direction of the coupling side surface. Thus, a large part of the light that has been coupled into the light transmitting layer and that has been transmitted along the light transmitting layer until the opposite end of the layer will be reflected backwards and will be again transmitted along the light transmitting layer, thus passing again the out-coupling surface region and increasing the amount of light that will exit the light transmitting layer at the out-coupling surface region and that will be reflected by the sample that is placed onto the out-coupling surface region. Preferably, the back side surface is a plane surface that is oriented perpendicular to the first surface or the second surface or both surfaces of the light transmitting layer. However, it is also possible for the back side surface to be curved in a manner as to focus the reflected light intensity onto the out-coupling surface region at the first surface of the light transmitting layer or to focus the reflected light intensity in any manner that increases the amount of light that exits the light transmitting layer at the out-coupling surface region. The back side surface may comprise a reflective coating similar to that of a mirror. It is also possible to arrange a reflecting element with a reflecting surface immediately adjacent to the back side surface in order to reflect all light back into the light transmitting layer of translucent or transparent material.

The light transmitting layer can be made of any transparent or translucent material, preferably of transparent material. Examples are glass or plastic materials like PMMA (polymethylmethacrylate), PC (polycarbonate) or PETG (polyethylene terephthalate glycole). The thickness of the layer can vary broadly. It can for example be between 50 micrometer to 20 mm, preferably the thickness is between 200 micrometer and 2 mm. The length of the layer is typically above 1 mm, preferably between 5 mm and 10 cm. The depth of the layer depends on the size of the out-coupling surface region.

According to an advantageous embodiment of the invention, the light transmitting layer is made of glass and preferably made of glass with a low iron content. A low content of iron, especially of iron (III) oxide, is typically below 0.02 % by weight of iron (III) oxide. Glass provides for very favorable transmission characteristics and total reflection characteristics for light that is coupled into the layer of glass. Thus, only a small fraction of light that is coupled into the layer of glass will be lost due to diffuse scattering effects inside of the layer of glass. Furthermore, the layer of glass provides a good protection of the light intensity sensor that is arranged opposite to the out-coupling surface region onto which the moist or wet sample is placed during a measurement cycle. The glass material is inert to most samples and liquid test solutions. Furthermore, the glass material provides for a very durable and resistant surface with optical properties that will not be changed or deteriorate during a long service life of the color reading device.

Making use of a glass material with a reduced content of iron improves the optical characteristics of the glass material with respect to the color reading process. The glass material with reduced content of iron will be more transparent and less opaque compared to glass material with a high iron content. Furthermore, a reduced content of iron results in a reduced greenish tint of the layer of glass material which allows for better detection of differently colored light with the light intensity sensor and enables more precise measurements with the color reading device.

The position of the light source and the light intensity sensor can be chosen depending on the overall set up of the color reading device. If needed, glass fiber linkers and/or mirrors can be integrated into the device to e.g. transfer the light reflected from the sample to the light intensity sensor in case the sensor cannot be positioned to directly read the reflected light. In this case a glass fiber linker or a mirror are arranged opposite to the out-coupling surface region and transfer the light that is reflected from the sample to the light intensity sensor. According to the present invention, this set-up is also covered by the statement that the light intensity sensor is opposite to the out-coupling surface region as it is essential that the light reflected and/or scattered by the sample surface region which passes through the light transmitting layer and exits the light transmitting layer opposite of the out-coupling surface region is detected by the light intensity sensor. But it is not relevant if the sensor itself is positioned opposite of the out-coupling surface region or if some other transfer device like a mirror is positioned there to direct the light to the light intensity sensor.

With the device of the present invention it is possible to generate a reflectometer that is smaller than the reflectometers known so far. The length of the device can be reduced to around 5 centimeters or less. The height can be reduced to around 1 cm.

The dimension of the out-coupling surface is typically between 1 mm² and 100 mm². It might have a square, rectangular or another shape whereby the area where the light is coupled out is finally defined by the surface of the wet sample which is in contact with the out-coupling surface. The length and depth of the transmitting layer can be adjusted to the dimensions of the out-coupling surface.

According to yet another aspect of the invention the light intensity sensor and the light source are mounted at a distance towards each other onto a substrate layer that is arranged at a distance towards the layer of translucent or transparent material. Preferably, the substrate layer is aligned in parallel to the light transmitting layer. The distance between the light transmitting layer and the substrate layer is large enough to allow for mounting the light source and the light intensity sensor onto the surface of the substrate layer that faces the light transmitting layer of translucent or transparent material, resulting in an arrangement of the light source and the light intensity sensor between the light transmitting layer and the substrate layer. However, the distance between both layers is preferably as small as possible to minimize the optical path between the sample surface region and the light intensity sensor, so that the solid angle of the reflected light detected by the sensor is as large as possible. Mounting both the light source and the light intensity sensor on the same substrate layer reduces the space requirements and the manufacturing costs.

According to a preferred embodiment of the invention the substrate layer is a printed circuit board. Thus, most or all required electronic components as well as reliable electrical connections between the components can be arranged on the printed circuit board. Apart from a housing and the light transmitting layer, the manufacture and assembly of many parts of the color reading device can be performed with well-known techniques and possibly fully automated. Light sources like e.g. light diodes and light intensity sensors that can be mounted onto a printed circuit board are commercially available at low costs. Preferably, the light source and the light intensity sensor can be attached onto the printed circuit board by using well-known surface-mount technologies.

The distance between the light source and the light intensity sensor is advantageously predefined in such a way that a thermal interference of the light intensity sensor by the thermal emission of the light source is reduced or prevented.

The light intensity sensor can be a suitable photodetector that allows for detection of light, preferably within the visible wavelength range, to be able to detect colors of a sample or a change of color of the sample. It can comprise one or more single light intensity sensors. Preferably the one or more light intensity sensors are located behind spectral filters. The light intensity sensor can comprise one or more photodiodes. Preferably, the light intensity sensor is an ambient light sensor that is usually used in smartphones to measure the brightness of the environment e.g. to adjust screen brightness or flash intensity. Many of such ambient light sensors allow for simultaneously measurement of multiple spectral bands of light within the visible wavelength range which facilitates the evaluation of light colors that are detected by such ambient light sensors. Furthermore, such ambient light sensors are commercially available, easily mounted onto a printed circuit board and do not require much space.

The light source can be a light emitting diode or a combination of several light emitting diodes. The light source can emit white light and/or UV light and/or infrared light. Preferably, the light source is a white light emitting diode. A suitable combination of several light emitting diodes may comprise a number of white light emitting diodes in order to increase the intensity of the light emission. It is also possible to combine several light emitting diodes with different spectral light emission patterns, e.g. a red, a green and a blue light emitting diode in order to provide for a superimposed light emission with a spectral pattern that is preset by the spectral characteristics and the intensity of the combined light emitting diodes. Such a combination of light emitting diodes also allows for a variation of the superimposed spectral pattern e.g. on behalf of an operator of the color reading device.

According to an advantageous aspect of the invention a shading barrier is arranged between the light source and the light intensity sensor in such a manner as to prevent any light from the light source to directly illuminate the light intensity sensor without being coupled into the layer of translucent or transparent material. The shading barrier can be a wall of non-transparent material that is arranged between the light source and the light intensity sensor. Preferably, the shading barrier is located near to or adjacent to the light intensity sensor. The shading barrier can also be a wall that surrounds and encloses the light intensity sensor. Furthermore, the shading barrier is preferably arranged tight fitting on the light transmitting layer to avoid any stray light that is not transmitted within the light transmitting layer of translucent material to illuminate the light intensity sensor.

The device of the present invention is suitable for performing reflectometric measurements of all types of samples that have a surface which reflects light and are wet so that a liquid provides for direct contact of the part of the sample that shall be measured with the out-coupling surface region. The direct contact supported by the wetting liquid is essential for coupling out the light which is transmitted through the light transmitting layer and directing it to the sample surface. The liquid used to wet the sample can be any liquid that provides for coupling out the light. The suitability of a liquid depends on its refractive index. The skilled person is able to determine a suitable liquid based on the refractive index of the light transmitting layer. The liquid can also be a mixture or two or more different solvents. In a preferred embodiment, especially in combination with a light transmitting layer made of glass, the liquid is water or an aqueous solution.

The sample is wetted with the liquid such that the liquid provides for a direct contact of a part of the sample surface with the out-coupling surface region. Typically the contact area is between 1 mm² and 100 mm².

The degree of wetness of the sample is typically not critical. The device of the present invention is also suitable for measuring the reflection of liquids. But in general, it is sufficient to have enough moisture or wetness to have a liquid film between the sample surface and the out-coupling surface region.

In case of the sample being a test strip the liquid testing solutions into which the test strip is dipped for performing the analysis are typically sufficient to wet the test strip. Typically, no further wetting is necessary. The same holds true for lateral flow devices. The liquid that has been applied to such a device typically provides for sufficient wetting of the sample area that shall be measured.

In case of dry samples the wetting liquid can e.g. be applied by dipping the sample into the liquid or by dripping the liquid onto the sample.

In case of powders, it is typically not required add so much liquid as to generate a powder suspension with single particles flowing freely within the liquid. It is sufficient to add enough liquid to generate a paste which can be applied onto the out-coupling surface region. The application onto the out-coupling surface region can be either directly or via a transfer device. The transfer device has a translucent or preferably transparent layer onto which the wet sample is applied and to which the wet sample has direct contact. The transfer device is then put in direct contact with the out-coupling surface region to allow for coupling out the light. The direct contact of the transfer device with the out-coupling surface region can also be provided by the application of a suitable liquid to provide for direct contact between the two parts. A transfer device is especially suitable in case of powder samples to facilitate sample application and removal.

The application of the sample into the color reading device depends on the type of sample. In case of test strips or lateral flow devices the strip or device can be inserted without any further support into the device such that the part that shall be measured faces towards the out-coupling surface region. In case of powder samples the wetted powders can be either applied directly onto the out-coupling surface region or with a transfer device as described above.

In yet another embodiment of the invention the color reading device comprises a backing pad that is arranged at a distance to the out-coupling surface region in such a manner as to provide a backing for a test strip or other suitable sample that is placed onto the reflective surface region during a color reading process. The backing pad can be a rod or tongue-shaped protrusion that is aligned parallel to the out-coupling surface region of the layer of translucent material and that extends over at least some part of the out-coupling surface region. By placing e.g. a test strip onto the out-coupling surface region and between the surface of the layer of translucent or transparent material and the backing pad, the test strip or at least the sample surface region that reflects light towards the light intensity sensor is pressed against the out-coupling surface region of the layer of translucent material and causes the sample surface region of the test strip to be tight fittingly placed at the reflective surface region. The backing pad prevents any distance between the sample and the out-coupling surface region that might unintentionally be created during the performance of a color reading measurement.

The sample can be pressed onto the reflective surface region without moving the sample during a measurement. It is also possible to swipe the sample, e.g. a test strip or any other suitable sample, along a measurement direction over the out-coupling surface region, causing a continuous shift of the sample surface region that will be illuminated by light and from which reflected light will be detected by the light intensity sensor. The backing pad can have guiding projections for guiding a moving test strip or other suitable sample along the measurement direction. It is also possible to arrange protrusions or ledges along an edge of the out-coupling surface region and to arrange the backing pad protruding away from the protrusions or ledges in such a manner as to provide for guiding means and backing means to facilitate proper alignment, orientation and, if required, movement of the sample with respect to the out-coupling surface region of the light transmitting layer of translucent or transparent material.

In yet another embodiment of the invention the color reading device comprises a lateral stop that is arranged next to the out-coupling surface region and defines a lateral guide for a sample that is placed onto the out-coupling surface region during a color reading process.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 schematically illustrates a cross-sectional view of a color reading device,
Figure 2 schematically illustrates another cross-sectional view of the color reading device along line II-II in Figure 1,
Figure 3 schematically illustrates a perspective view of a test strip for which a color reading process can be performed with the color reading device,
Figure 4 schematically illustrates an enlarged cross-sectional view of a coupling side surface of a layer of translucent material of the color reading device, and
Figure 5 schematically illustrates an enlarged cross-sectional view of a back side surface of the layer of translucent material of the color reading device.

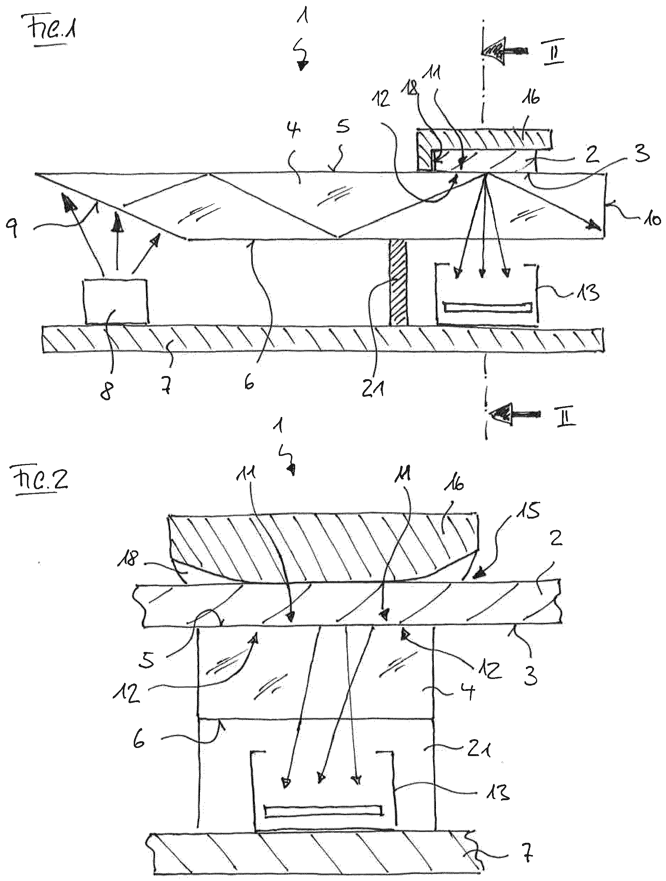

Figures 1 and 2 illustrate an exemplary embodiment of a color reading device 1 for detecting colors of a sample 2, in this case a test strip is used as exemplary sample that has been exposed to a liquid testing solution that alters the coloration of a test strip surface 3. The color reading device 1 comprises a light transmitting layer 4 that is made of a translucent or transparent material with a first surface 5 facing outward and a second surface 6 facing towards a substrate layer 7. The substrate layer 7 is a printed circuit board. A light source 8, e.g. a white light emitting diode is arranged on the substrate layer 7 facing the light transmitting layer 4. The light transmitting layer 4 comprises a coupling side surface 9 that runs at one end of the light transmitting layer 4 from the first surface 5 to the second surface 6. The coupling side surface 9 is a plane surface that is oriented with an acute angle towards the first surface 5. The light source 8 on the substrate layer 7 is arranged and oriented in such a manner as to illuminate the coupling side surface 9. Most of the light that illuminates the coupling side surface 9 will be coupled into the light transmitting layer 4. The coupling side surface 9 is roughened or coated in order to provide for a coupling of diffuse light into the light transmitting layer 4 of translucent or transparent material. A significant amount of light will then be transmitted within the light transmitting layer 4 along a transmission direction towards another end of the light transmitting layer 4 due to one or several total internal reflections of the light within the light transmitting layer 4.

The light that is transmitted along the transmission direction from the coupling side surface 9 to a back side surface 10 at the opposite end of the light transmitting layer 4 passes by an out-coupling surface region 11 on the first surface 5. If there is no test strip 2 pressed onto the out-coupling surface region 11, the light will pass the out-coupling surface region 11 without exiting the light transmitting layer 4. However, if a wet test strip 2 is pressed onto the out-coupling surface region 11, this affects the refractive index and causes some light to exit the light transmitting layer 4 and to illuminate a sample surface region 12 of the test strip 2 that covers the out-coupling surface region 11 of the light transmitting layer 4. This amount of light will then be reflected by the test strip 2 and the reflected light will be directed backwards through the light transmitting layer 4 towards the second surface 6 and towards a light intensity sensor 13 that is arranged on the substrate layer 7 opposite to the out-coupling surface region 11 in such a manner that a large amount of light that is reflected by the test strip 2 will illuminate the light intensity sensor 13 and will be detected by the light intensity sensor 13.

Preferably, the light source 8 is a white light emitting diode and the light intensity sensor 13 is an ambient light sensor that is capable of simultaneously detecting and measuring multiple spectral bands of light that illuminates the light intensity sensor 13. Thus, by evaluating the sensor measurement data the color of the sample surface region 12 that is pressed onto the out-coupling surface region 11 of the light transmitting layer 4 can be determined. Evaluation of the color of the sample surface region 12 or of a color change due to the exposure of the test strip 2 to a liquid testing solution may include a comparison with reference data that has been previously measured with a blank test strip 2 that has not been exposed to any liquid testing solution or with reference data that has been measured with the same test strip 2 just before a subsequent exposure to a liquid testing solution.

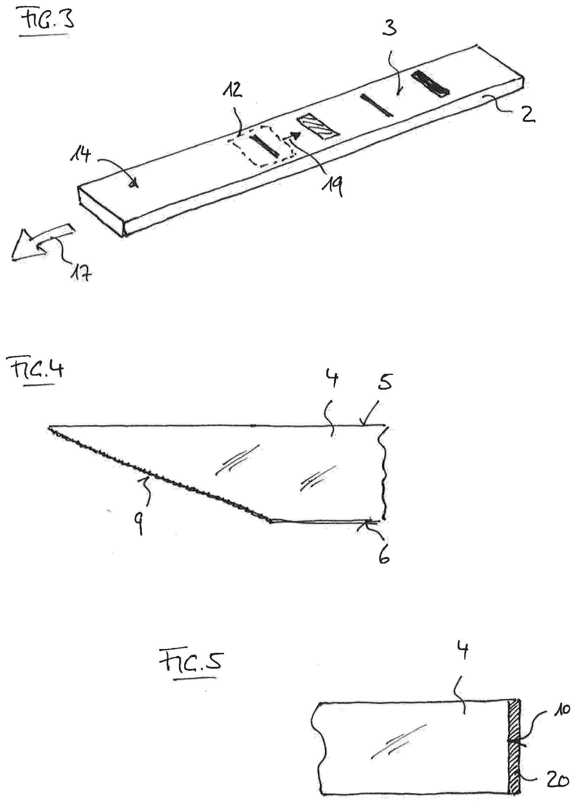

Figure 2 also illustrates the execution of a measurement process with the test strip 2 laterally displaced over and pressed onto the out-coupling surface region 11 of the light transmitting layer 4. Figure 3 illustrates an exemplary embodiment of the test strip 2. A start region 14 of the test strip 2 is placed in a slit 15 between the out-coupling surface region 11 and a strip backing pad 16 that is arranged at a distance towards the out-coupling surface region 11. The distance and shape of a surface of the strip backing pad 16 that faces the out-coupling surface region 11 is designed to allow for an easy insertion of the test strip 2 into the slit 15 as well as to provide enough pressure onto the test strip 2 in order to ensure a close contact of the sample surface region 12 with the first surface 5 of the light transmitting layer 4 within the out-coupling surface region 11.

During a measurement process, the test strip 2 is displaced along a displacement direction 17 resulting in a displacement of the sample surface region 12 that faces the out-coupling surface region 11 of the light transmitting layer 4 and causes reflected light that exits the light transmitting layer 4 and is reflected by the sample surface region 12 to illuminate the light intensity sensor 13. Proper position, orientation and direction of displacement during the measurement process can be ensured by a lateral stop 18 that is arranged next to the out-coupling surface region 11 and that defines a lateral guide for a test strip 2. During the measurement process and the corresponding displacement of the test strip 2 through the slit 15, a number of separate intensity measurements can be performed with the light intensity sensor 13 resulting in a corresponding number of color information for many sample surface regions 12 adjacent to each other along the surface of the test strip 2. Due to the displacement of the test strip 2 the sample surface region 12 that limits the origin of reflected light which can be detected by the light intensity sensor 13 moves over the surface of the test strip 2 along a measurement process direction 19 that is opposite to the displacement direction 17. Each separate measurement can be matched to a position on the surface of the test strip 2. For each separate measurement the color of the reflected light that is detected by the light intensity sensor can be determined on the basis of the corresponding measurement data.

Figure 4 schematically illustrates the coupling side surface 9 of the light transmitting layer 4. The coupling side surface 9 is roughened or coated in order to provide for a coupling of diffuse light into the light transmitting layer 4 of translucent material.

Figure 5 schematically illustrates the back side surface 10 of the light transmitting layer 4. The back side surface 10 is optionally coated with a light reflective coating 20 that reflects light that is transmitted along the transmission direction from the light source 8 towards the back side surface 10 backwards into the direction of the coupling side surface 9, causing the reflected light to again pass along the out-coupling surface region 11 and possibly to exit the light transmitting layer 4 and to be reflected towards the light intensity sensor 13.

In order to reduce any unwanted interference of light that is emitted by the light source 8 but not coupled into the light transmitting layer 4 or that exits the light transmitting layer 4 somewhere different from the out-coupling surface region 11, a shading barrier 21 is arranged between the light source 8 and the light intensity sensor 13. The shading barrier is made of a non-transparent material that prevents light from traversing through the shading barrier 21. The shading barrier 21 can be mounted onto the substrate layer 7. The shading barrier 21 preferably extends up to the light transmitting layer 4 and is arranged tight fitting to the second surface 6 of the light transmitting layer 4.

The present invention is further directed to a method for reading a color of a sample surface region of a wet sample using the color reading device of the present invention. For this the sample surface region of a wet sample is contacted with the out-coupling surface region of a light transmitting layer. Then light is transmitted from a light source into the light transmitting layer in which it is transmitted at least partly by total reflection. As soon as the light transmitted within the light transmitting layer passes the out-coupling surface region in contact with the sample surface region, part of the liqht is coupled out, hits the sample surface area, is scattered or reflected by the sample surface area and is then detected by a light intensity sensor.

The method thus comprises the steps of
a) Providing a color reading device according to the present invention
b) Inserting a wet sample into the color reading device
c) Determining the color of the surface region of the sample

A sample can be everything suitable to reflect light. It can be a surface, e.g. of a test strip or a lateral flow device. It can also be a liquid like an emulsion or a suspension or a particulate material like a powder.

In a preferred embodiment the sample is a powder, a test strip or a lateral flow device.

The surface region of a sample is the part or region of the sample that is reached by the light which is coupled out of the light transmitting layer.

The present invention provides an easy and effective way to determine the color of samples and optionally thereby the concentration of sample ingredients or ingredients in liquid testing solutions that have been contacted with the sample, e.g. in case the sample is a test strip or lateral flow device. It is very flexible concerning the type of sample. The only requirement is that the sample is wet or can be wetted prior to the measurement to generate a liquid film between the sample and the out-coupling surface region of the light transmitting layer.

The device provides for a set-up that can be miniaturized to a pocket size device, smaller than a smart phone, that can be easily transported. By adapting the light sources, sensors and other device features it can be adapted to different sample types and colors.

## Claims

1. Color reading device (1) for reading a color of a sample surface region (12) of a wet sample (2), whereby the color reading device (1) comprises a light source (8) for illuminating the sample surface region (12), and further comprises a light intensity sensor(13) for measuring a light intensity at one or different spectral regions that is scattered or reflected from the illuminated sample surface region (12), which can be used for determining the color of the illuminated sample surface region (12), **characterized in that** the color reading device (1) comprises a light transmitting layer (4) of a transparent or translucent material with a first surface (5) of the light transmitting layer (4) comprising an out-coupling surface region (11) onto which the sample surface region (12) of the sample (2) can be placed, and with the light intensity sensor (13) arranged at the other side of the light transmitting layer (4) opposite to the out-coupling surface region (11), whereby light that is scattered or reflected by the sample surface region (12) that is arranged adjacent to and facing towards the out-coupling surface region (11) can be detected by the light intensity sensor (13), and **in that** the light source (8) is arranged at a coupling side surface (9) of the light transmitting layer (4) of translucent or transparent material, whereby the arrangement of the light source (8) with respect to the coupling side surface (9) is designed to couple light that is emitted from the light source (8) into the light transmitting layer (4) in such a manner that at least part of the light is then totally reflected within the light transmitting layer (4) along a light transmission direction that passes by the out-coupling surface region (11) .

2. Color reading device (1) according to claim 1, **characterized in that** the coupling side surface (9) is a plane surface that is oriented with an acute angle towards the first surface (5) comprising the out-coupling surface region (11) or towards a second surface (6) of the light transmitting layer (4) opposing the first surface (5).

3. Color reading device (1) according to claim 1 or claim 2, **characterized in that** the coupling side surface (9) is roughened or coated in order to provide for a coupling of diffuse light into the light transmitting layer (4) of translucent or transparent material.

4. Color reading device (1) according to one or more of claims 1 to 3, **characterized in that** the light transmitting layer (4) further comprises a back side surface (10) opposite to the coupling side surface (9) that reflects light back in the direction of the coupling side surface (9).

5. Color reading device (1) according to one or more of claims 1 to 4, **characterized in that** the light transmitting layer (4) of translucent or transparent material is made of glass and preferably made of glass with a low iron content.

6. Color reading device (1) according to one or more of claims 1 to 5, **characterized in that** the light intensity sensor (13) and the light source (8) are mounted at a distance towards each other onto a substrate layer (7) that is arranged next to and at a distance towards the light transmitting layer (4) of translucent or transparent material.

7. Color reading device (1) according to claim 6, **characterized in that** the substrate layer (7) is a printed circuit board.

8. Color reading device (1) according to claim 6 or claim 7, **characterized in that** a shading barrier (21) is arranged between the light source (8) and the light intensity sensor (13) in such a manner as to prevent light from the light source (8) to directly illuminate the light intensity sensor (13) without being scattered or reflected from the sample surface region (12).

9. Color reading device (1) according to one or more of claims 1 to 8, **characterized in that** the color reading device (1) comprises a backing pad (16) that is arranged at a distance to the out-coupling surface region (11) in such a manner as to provide a backing for the sample (2) that is placed onto the out-coupling surface region (11) during a color reading process.

10. Color reading device (1) according to one or more of claims 1 to 9, **characterized in that** the backing pad (16) presses the sample (2) against the out-coupling surface region (11) to improve the wetting of said out-coupling surface region.

11. Color reading device (1) according to one or more of claims 1 to 10, **characterized in that** the color reading device (1) comprises a lateral stop (18) that is arranged next to the out-coupling surface region (11) and defines a lateral guide for a sample (2) that is placed onto the reflective surface region (11) during a color reading process.
